# EUROPEAN PATENT SPECIFICATION

(11) **EP 1 820 876 B1**
(45) Date of publication and mention of the grant of the patent: **13.07.2011**
(21) Application number: 07101752.9
(22) Date of filing: 05.02.2007
(51) Int. Cl.: C23C 10/06, C23C 10/14, C23C 28/00, C23C 30/00

(54) **Method of coating gas turbine components**
Verfahren zur Beschichtung von Gasturbinenkomponenten
Procédé de revêtement de composants d'une turbine à gaz

(30) Priority: 15.02.2006 US 354363
(43) Date of publication of application: 22.08.2007
(73) Proprietor: GENERAL ELECTRIC COMPANY, Schenectady, NY 12345 (US)
(72) Inventor: Gupta, Bhupendra Kumar, Cincinnati, OH 45249 (US); Das, Nripendra Nath, West Chester, OH 45069 (US); Saylor, Matthew David, Blanchester, OH 45107 (US); Zimmerman, Jr.,, Robert George, Morrow, OH 45152 (US)
(74) Representative: Bedford, Grant Richard

(56) References cited:
- EP-A- 1 079 073
- EP-A- 1 445 345
- EP-A- 1 524 328
- EP-A1- 1 445 346
- US-A1- 2004 180 232
- US-A1- 2005 084 706

## Description

This invention relates generally to gas turbine engines, and more particularly, to methods of depositing protective coatings on components of gas turbine engines.

Gas turbine engines typically include high and low pressure compressors, a combustor, and at least one turbine. The compressors compress air which is mixed with fuel and channeled to the combustor. The mixture is then ignited for generating hot combustion gases, and the combustion gases are channeled to the turbine which extracts energy from the combustion gases for powering the compressor, as well as producing useful work to propel an aircraft in flight or to power a load, such as an electrical generator.

The operating environment within a gas turbine engine is both thermally and chemically hostile. Significant advances in high temperature alloys have been achieved through the formulation of iron, nickel and cobalt-base superalloys, though components formed from such alloys often cannot withstand long service exposures if located in certain sections of a gas turbine engine, such as the turbine, combustor and augmentor. A common solution is to provide turbine, combustor and augmentor components with an environmental coating that inhibits oxidation and hot corrosion, or a thermal barrier coating (TBC) system that, in addition to inhibiting oxidation and hot corrosion, also thermally insulates the component surface from its operating environment.

Coating materials that have found wide use as environmental coatings include diffusion aluminide coatings, which are generally single-layer oxidation-resistant layers formed by a diffusion process, such as pack cementation. Diffusion processes generally entail reacting the surface of a component with an aluminum-containing gas composition to form two distinct zones, the outermost of which is an additive layer containing an environmentally-resistant intermetallic represented by MAl, where M is iron, nickel or cobalt, depending on the substrate material. Beneath the additive layer is a diffusion zone that includes various intermetallic and metastable phases that form during the coating reaction as a result of diffusion gradients and changes in elemental solubility in the local region of the substrate. During high temperature exposure in air, the MA1 intermetallic forms a protective aluminum oxide (alumina) scale or layer that inhibits oxidation of the diffusion coating and the underlying substrate.

High reliability TBC bond coats consisting of a NiAl overlay coating is highly sensitive to aluminide processing. Aluminide before and/or after the NiAl coating can result in substantial degradation of the TBC cyclic life. However, in order to protect the inside cooling passages from oxidation and hot corrosion, a vapor phase aluminide is required. This cross-functional requirement between external and internal surfaces of a turbine part forces a highly labor intensive and costly process of vapor phase aluminiding (VPA) coating, wax filling of internal passages to protect internals, chemical stripping of aluminide from external surfaces and protecting the internal passages while chemical processing. Additionally, these steps add the risk of chemically attacking the coating deposited on the internal passages.

Known process technology consists of VPA coating, at about 982°C (1800°F) to about 1093°C (2000°F), the entire blade including both internal and external surfaces, filling inside passages with wax to protect from chemical attack, striping Al from the external surfaces by chemical surface treatment, removing the wax, and heat tint to assure that all aluminide is removed. These process steps can add a cost penalty and about 7-10 days of added manufacturing time.

The European patent EP 1 524 328 A1 discloses a method of selected region vapour phase aluminizing by means of control of the processing temperature, activator concentration, time etc with the objective of minimizing the formation of an aluminized surface on the NiAl-coated exterior surfaces.

Various aspects of the invention are set out in the claims.

In one aspect according to the present invention, a method of forming a metal coating on surfaces on a turbine part is provided. The method includes positioning the turbine part in a VPA chamber, coupling a gas manifold to at least one internal passage inlet, and coating the internal surface and the external surface of the turbine part by a vapor phase aluminiding (VPA) process using metallic coating gases to form an aluminide coating on the internal surfaces of the turbine part and a coating at least partially over the bond coating.

In another aspect, a method of forming a metal coating on surfaces of internal passages of a turbine part, the turbine part having an outer surface and including at least one internal passage is provided. The method includes applying a highly oxidation resistant nickel aluminide ( NiAl) bond coat to the external surfaces of the turbine part, positioning the blade in VPA coating chamber, placing a source of aluminum in the form of small chunks, introducing a halide compound to form gaseous vapor at higher temperatures, and forming an aluminide coating at both internal surfaces and external surfaces.

Various aspects and embodiments of the present invention will now be described in connection with the accompanying drawings, in which:
Figure 1 is schematic illustration of a gas turbine engine.
Figure 2 is a perspective schematic illustration of an exemplary turbine rotor blade shown in Figure 1.
Figure 3 is an internal schematic illustration of the turbine rotor blade shown in Figure 2.
Figure 4 is an internal schematic illustration of the turbine rotor blade shown in Figure 2 coupled to a vapor phase aluminiding manifold.
Figure 5 is a schematic illustration of a vapor phase aluminiding system.
Figure 6 is a flow diagram of a method of coating the exemplary turbine rotor blade shown in Figure 2.

A method of coating the internal and external surfaces of a turbine part, such as a rotor blade for example, with an oxidation resistant coating while maintaining the performance of nickel aluminide coating is described below in detail. The method includes coating the external surfaces of the turbine part with a nickel aluminide coating and utilizing a vapor phase aluminiding process to deposit a protective coating on the internal and external surfaces of the turbine part to protect the turbine part from oxidation and hot corrosion. The uniqueness of the process parameters is designed in such a way so as to provide an equilibrium composition of aluminide vapors with nickel aluminide external surfaces while providing coating to internal surfaces.

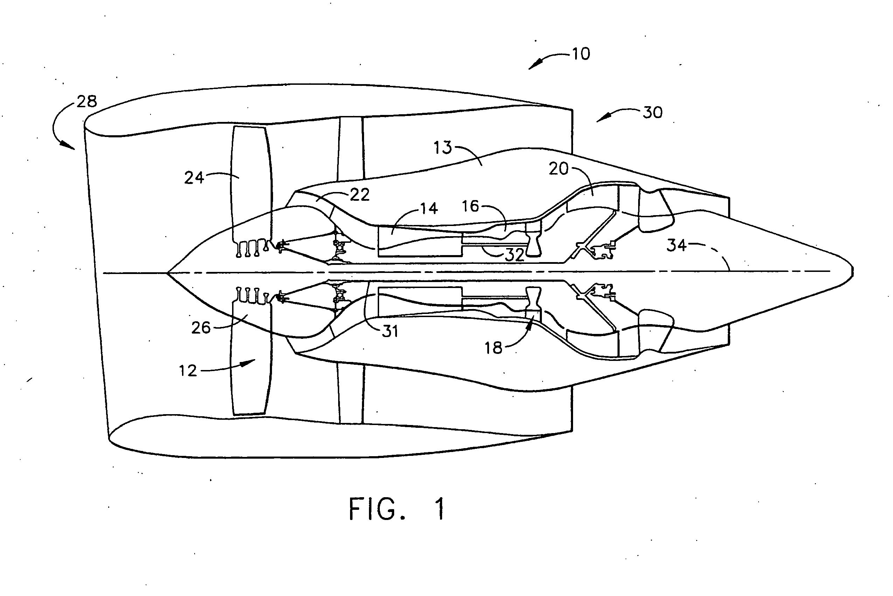

Referring to the drawings, Figure 1 is a schematic illustration of a gas turbine engine 10 that includes a fan assembly 12 and a core engine 13 including a high pressure compressor 14, a combustor 16, and a high pressure turbine 18. Engine 10 also includes a low pressure turbine 20, and a booster 22. Fan assembly 12 includes an array of fan blades 24 extending radially outward from a rotor disc 26. Engine 10 has an intake side 28 and an exhaust side 30. In one embodiment, the gas turbine engine is a GE90 available from General Electric Company, Cincinnati, Ohio. Fan assembly 12 and turbine 20 are coupled by a first rotor shaft 31, and compressor 14 and turbine 18 are coupled by a second rotor shaft 32.

During operation, air flows through fan assembly 12, along a central axis 34, and compressed air is supplied to high pressure compressor 14. The highly compressed air is delivered to combustor 16. Airflow (not shown in Figure 1) from combustor 16 drives turbines 18 and 20, and turbine 20 drives fan assembly 12 by way of shaft 31.

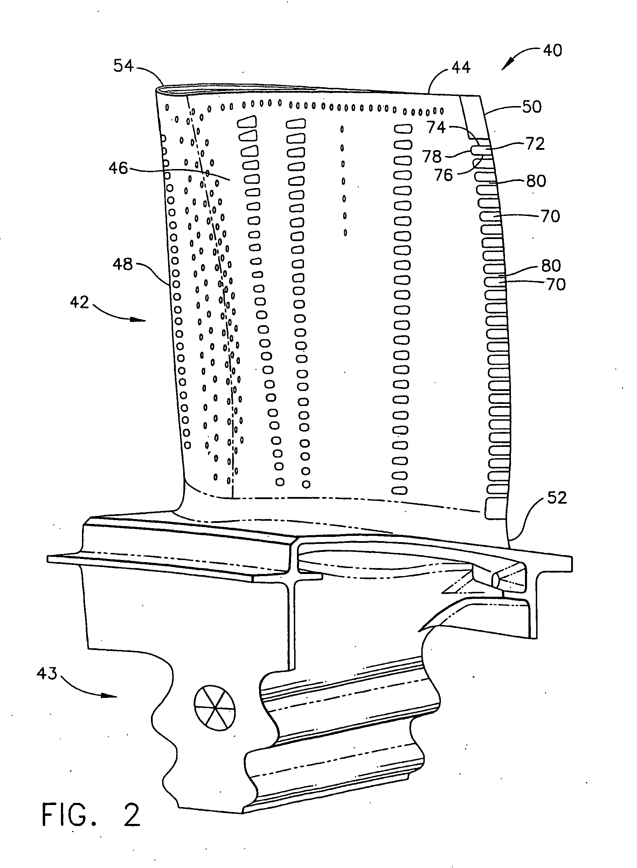

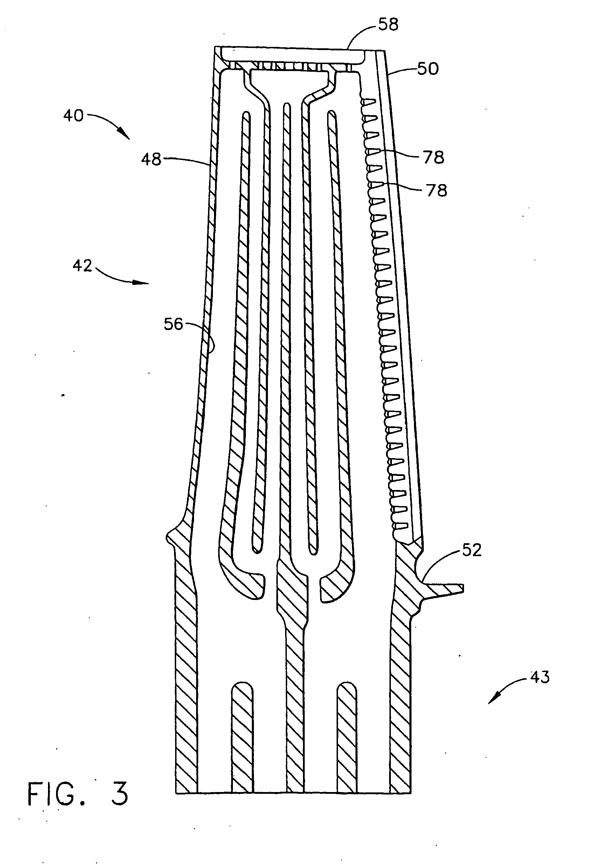

Figure 2 is a perspective schematic illustration of a turbine part that may be used with gas turbine engine 10 (shown in Figure 1). Figure 3 is an internal schematic illustration of the turbine part. In the exemplary embodiment, the method is described herein with respect to a turbine rotor blade 40, however the method is not limited to turbine blade 40 but may be utilized on any turbine part. Referring to Figures 2 and 3, in an exemplary embodiment, a plurality of turbine rotor blades 40 form a high pressure turbine rotor blade stage (not shown) of gas turbine engine 10. Each rotor blade 40 includes a hollow airfoil 42 and an integral dovetail 43 used for mounting airfoil 42 to a rotor disk (not shown) in a known manner.

Airfoil 42 includes a first sidewall 44 and a second sidewall 46. First sidewall 44 is convex and defines a suction side of airfoil 42, and second sidewall 46 is concave and defines a pressure side of airfoil 42. Sidewalls 44 and 46 are connected at a leading edge 48 and at an axially-spaced trailing edge 50 of airfoil 42 that is downstream from leading edge 48.

First and second sidewalls 44 and 46, respectively, extend longitudinally or radially outward to span from a blade root 52 positioned adjacent dovetail 43 to a tip plate 54 which defines a radially outer boundary of an internal cooling chamber 56. Cooling chamber 56 is defined within airfoil 42 between sidewalls 44 and 46. Internal cooling of airfoils 42 is known in the art. In the exemplary embodiment, cooling chamber 56 includes a serpentine passage 58 cooled with compressor bleed air.

Cooling cavity 56 is in flow communication with a plurality of trailing edge slots 70 which extend longitudinally (axially) along trailing edge 50. Particularly, trailing edge slots 70 extend along pressure sidewall 46 to trailing edge 50. Each trailing edge slot 70 includes a recessed wall 72 separated from pressure sidewall 46 by a first sidewall 74 and a second sidewall 76. A cooling cavity exit opening 78 extends from cooling cavity 56 to each trailing edge slot 70 adjacent recessed wall 72. Each recessed wall 72 extends from trailing edge 50 to cooling cavity exit opening 78. A plurality of lands 80 separate each trailing edge slot 70 from an adjacent trailing edge slot 70. Sidewalls 74 and 76 extend from lands 80.

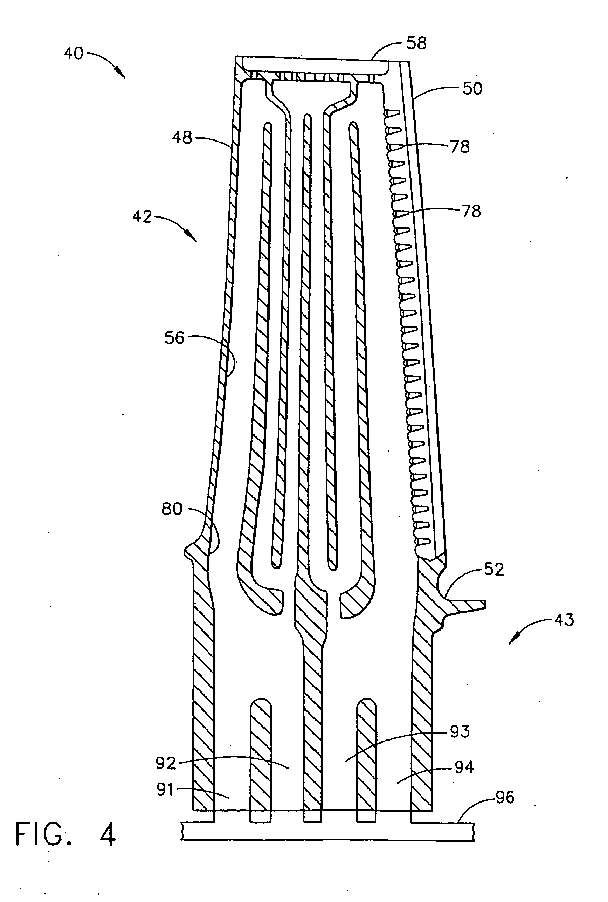

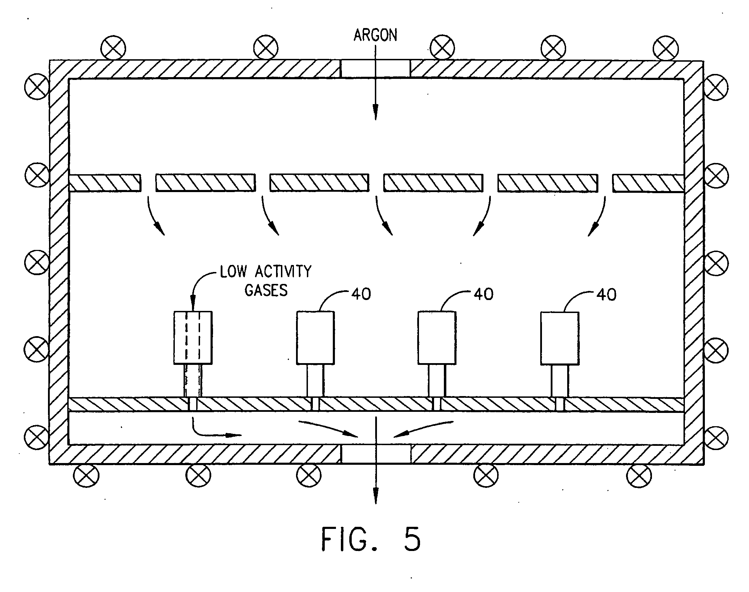

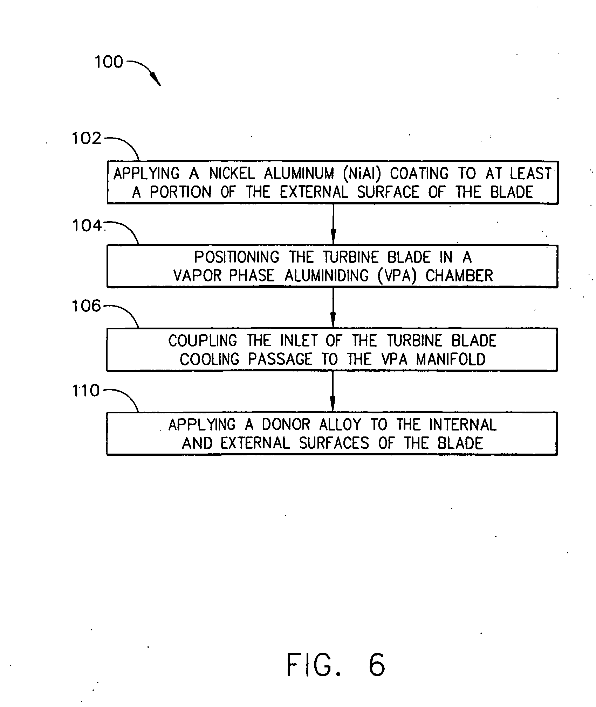

Referring also to Figures 4, 5, and 6, in the exemplary embodiment, to protect both the internal and external surfaces of the turbine part, e.g. turbine rotor blade 40, from oxidation and hot corrosion, turbine part 40 is coated by a process 100 to deposit a nickel aluminide (NiAl) coating on the exterior surface of airfoil 42. Specifically, the nickel aluminide coating is applied to at least a portion of first sidewall 44 and second sidewall 46. In the exemplary embodiment, the nickel aluminide coating is applied 102 to substantially the entire external surface of airfoil 42 to a thickness between approximately 25.4 µm (0.001 inches (1 mil)) and approximately 76.2 µm (0.003 inches (3 mils)). In the exemplary embodiment, the nickel aluminide coating is a base coat that is applied 102 to substantially the entire external surface of airfoil 42 to a thickness of approximately 50.8 µm (0.002 inches (2 mils)). The nickel aluminide coating is generally an aluminide bond coat that may include aluminum, nickel, zirconium, and/or chromium.

In the exemplary embodiment, the nickel aluminide bond coating is applied to airfoil 42 using a line-of-sight process such as an ion plasma deposition process, electron beam physical deposition (EB-PVD), or any other high energy deposition processes.

The externally coated turbine part 40 is then positioned 104 within a vapor phase aluminiding (VPA) chamber 88 of a VPA coating system 90. The vapor phase aluminiding system includes the donor alloy pellets of chromium -aluminum, cobalt-aluminum, or nickel-aluminum composition, a halide activator to produce aluminum containing vapors, a source of heat (furnace), and a manifold to flow gases through internal surfaces.

In the exemplary embodiment, the donor alloy is a chromium -aluminum composition. Specifically, a temperature within chamber 88 is set between approximately 982°C (1800° Fahrenheit (F)) and approximately 1121°C (2050° F). In the exemplary embodiment, a temperature within chamber 88 is set to approximately 1079°C (1975° F) and the aluminide gases are then generated from the reaction of the chrome-aluminum donor alloy and the halide gased into chamber 88 such that a portion of the aluminum gases is deposited on the external and internal surface of airfoil 42 over a period of time between approximately thirty minutes and approximately four hours, generally approximately two hours. In the exemplary embodiment, the aluminide coating is deposited to a thickness between approximately 12.7 µm (0.0005 inches (1/2 mil)) and approximately 38.1 µm (0.0015 inches (1.5 mils)) on the internal surfaces of turbine part 40 with negligible or a very small amount of coating being deposited on the external surface of turbine part 40. The chemical composition of the chromium-aluminum donor alloy and the activator are contained in the VPA chamber to produce aluminum halide gases with an activity of aluminum, namely the mole fraction of aluminum in the gases, so that a required aluminum coating is obtained in the internal surfaces while the external nickel aluminide surface remains unchanged in chemical composition, or experiences a minor change in chemical composition. In a more preferred embodiment, the chemical composition of chrome-aluminum donor alloy is about 80 weight percent of chromium and 20 weight percent of aluminum. The donor alloy is preferably lower in aluminum composition compared to present conventional practice of using donor alloy of composition between about 30 weight percent aluminum to 50 weight percent aluminum. The primary theoretical mechanism includes that the amount of aluminum in the low activity aluminum donor alloy is sufficient to give aluminum to nickel-base alloy whereas the aluminum in the donor alloy is not high enough to transfer additional aluminum to the nickel aluminide bond coat. Due to the preferred composition of the low activity of aluminum in the vapor phase in the aluminum halide gases, the external surface of the turbine part containing the nickel aluminide bond coat remains practically the same as before the vapor phase treatment. In the preferred embodiment, the aluminum halide activator (AlF3) is between approximately 10.6 and 15.7 g of AlF₃ for 1 m³/hr (0.3 and 0.5 grams of AlF3 for 1 cu.ft/hr) of transport gas. In the preferred embodiment, the transport gases may be hydrogen, helium, nitrogen and argon. The most preferred gas is hydrogen. In the most preferred embodiment, the flow of transport gases is designed proportionally to provide aluminiding vapor flow through internal cavities, while simultaneously substantially decreasing the activity of aluminiding gases to obtain equilibrium with the external coating of nickel aluminide. In the preferred embodiment, it is estimated that the flow of transport gases of five equivalent volume of coating chamber 88 per hour reduces activity of aluminum by about 5 percent. The most preferred range of transport gas flow is between approximately 2.8 and 5.7 m³/hr (100 and 200 cu.ft/hr).

The aluminizing process is run for a period of time in the range of about 1 hour to about 10 hours depending on the temperature at which the turbine part is aluminided. In the preferred embodiment, the time of aluminiding is kept at the low end of this range to lower aluminum activity. In a most preferred process, the time is approximately 2 hours at a temperature of approximately 1975° Fahrenheit (1070° Celsius).

The above described process 100 provides for coating the external surfaces of turbine part 40 with a protective NiAl coating to protect the external surfaces from corrosion and/or oxidation. Furthermore, the NiAl coating is an oxidation resistant bond coat for the electron beam physical vapor deposition ( EB-PVD) thermal barrier coating. The most preferred embodiment of this invention provides the NiAl bond coat under original condition with no degradation in various performance.

Specifically, process 100 includes using a VPA system to provide internal aluminiding with an equilibrium activity aluminum vapors such that the external surface of the blade does not get over-aluminided while the internal surfaces of the blade receive a coating that has a desired thickness

### PARTS LIST

- 10: Gas turbine engine
- 12: Fan assembly
- 13: Core engine
- 14: High pressure compressor
- 16: Combustor
- 18: High pressure turbine
- 20: Low pressure turbine
- 22: Booster
- 24: Fan blades
- 26: Rotor disc
- 28: Intake side
- 30: Exhaust side
- 31: First rotor shaft
- 32: Second rotor shaft
- 34: Central axis
- 40: Turbine part
- 42: Airfoil
- 43: Dovetail
- 44: First sidewall
- 46: Second sidewall
- 48: Leading edge
- 50: Trailing edge
- 52: Blade root
- 54: Tip plate
- 56: Cooling chamber
- 58: Serpentine passage
- 70: Trailing edge slot
- 72: Recessed wall
- 74: First sidewall
- 76: Second sidewall
- 78: Cooling cavity exit opening
- 80: Lands
- 88: Vapor phase aluminiding (VPA) chamber
- 90: VPA coating system
- 100: Process provides for coating the external surface
- 102: Applying a nickel aluminum (NiAl) coating to substantially the entire external surface of airfoil
- 104: Positioning the turbine blade in a vapor phase aluminiding (VPA) Chamber

## Claims

1. A method of forming a metal coating on surfaces of internal passages of a turbine part (40), the turbine part having an outer surface and comprising at least one internal passage, said method comprising:
applying a nickel aluminide bond coating to an external surface of the turbine part;
positioning the turbine part in a VPA chamber (88);
coupling a gas manifold to at least one internal passage inlet;
exposing the turbine part to a low activity chromium and aluminum donor alloy composition including chromium and aluminum, the composition including between approximately ten weight percent aluminum and approximately twenty four weight percent aluminum; and
coating the internal surface of the turbine part by a vapor phase aluminiding (VPA) process to form a nickel aluminide coating on the internal surface.

2. A method in accordance with Claim 1 wherein the coating is formed at the internal surface by reaction of aluminum halide gases with the metal surface.

3. A method in accordance with any preceding Claim further comprising heat treating the metal coating at 1038 °C (1900°F) to 1121°C (2050°F) for about 30 minutes to about 4 hours.

4. A method in accordance with any preceding Claim further comprising applying a bond coating between approximately 25.4µm (0.001 inches) and approximately 76.2µm (0.003 inches) in thickness to the external surface of the turbine part (40).

5. A method in accordance with any preceding Claim further comprising applying an aluminum coating between approximately 12.7µm (0.0005 inches) and approximately 38.1µm (0.0015 inches) in thickness to at least a portion of the internal surface of the turbine part (40).

## Patentansprüche

1. Verfahren zum Erzeugen einer Metallbeschichtung auf Oberflächen von Innenkanälen eines Turbinenteils (40), wobei das Turbinenteil eine Außenoberfläche hat und wenigstens einen Innenkanal aufweist, wobei das Verfahren die Schritte aufweist:
Aufbringen einer Nickelaluminidhaftschicht auf einer Außenoberfläche des Turbinenteils;
Positionieren des Turbinenteils in einer VPA-Kammer (88);
Ankoppeln eines Gasverteilers an wenigstens einem Innenkanaleinlass;
Aussetzen des Turbinenteils an eine Chrom- und AluminiumSpenderlegierungszusammensetzung niedriger Aktivität, die Chrom und Aluminium enthält, wobei die Zusammensetzung zwischen angenähert 10 Gewichtsprozent Aluminium und angenähert 24 Gewichtsprozent Aluminium enthält; und
Beschichten der Innenoberfläche des Turbinenteils durch einen Dampfphasenaluminisierungs-(VPA)-Prozess, um eine Nickelaluminidbeschichtung auf der Innenoberfläche auszubilden.

2. Verfahren nach Anspruch 1, wobei die Beschichtung an der Innenoberfläche durch eine Reaktion von Aluminiumhalogengasen mit der Metalloberfläche ausgebildet wird.

3. Verfahren nach einem der vorstehenden Ansprüche, ferner mit dem Schritt einer Wärmebehandlung der Metallbeschichtung bei 1038 °C (1900 °F) bis 1121 °C (2050 °F) für etwa 30 Minuten bis etwa 4 Stunden.

4. Verfahren nach einem der vorstehenden Ansprüche, ferner mit dem Schritt der Aufbringung einer Haftbeschichtung zwischen angenähert 25,4 µm (0,001 Inches) und angenähert 76,2 µm (0,03 Inches) Dicke auf der Außenoberfläche des Turbinenteils (40).

5. Verfahren nach einem der vorstehenden Ansprüche, ferner mit dem Schritt der Aufbringung einer Aluminiumbeschichtung zwischen angenähert 12,7 µm (0,0005 Inches) und angenähert 38,1 µm (0,0015 Inches) Dicke auf wenigstens einem Teilabschnitt der Innenoberfläche des Turbinenteils (40).

## Revendications

1. Procédé pour former un revêtement métallique sur des surfaces de passages internes d'une pièce (40) de turbine, la pièce de turbine ayant une surface extérieure et comportant au moins un passage interne, ledit procédé comprenant :
l'application d'un revêtement de liaison en aluminiure de nickel sur une surface extérieure de la pièce de turbine ;
l'installation de la pièce de turbine dans une chambre d'aluminisation en phase vapeur (88) ;
le raccordement d'un distributeur de gaz à au moins une entrée de passage intérieur ;
l'exposition de la pièce de turbine à une composition d'alliage de donneurs de chrome et d'aluminium à basse activité, contenant du chrome et de l'aluminium, la composition contenant d'environ 10 pour cent en poids d'aluminium à environ 20 pour cent en poids d'aluminium ; et
le revêtement de la surface intérieure de la pièce de turbine par un procédé d'aluminisation en phase vapeur pour former un revêtement d'aluminiure de nickel sur la surface intérieure.

2. Procédé selon la revendication 1, dans lequel le revêtement est formé sur la surface intérieure par réaction d'halogénures d'aluminium gazeux avec la surface métallique.

3. Procédé selon l'une quelconque des revendications précédentes, comprenant en outre un traitement thermique du revêtement métallique pendant environ 30 minutes à environ 4 heures à une température de 1038°C (1900°F) à 1121°C (2050°F).

4. Procédé selon l'une quelconque des revendications précédentes, comprenant en outre l'application d'un revêtement de liaison sur la surface extérieure de la pièce (40) de turbine, sur une épaisseur d'environ 25,4 µm (0,001") à environ 76,2 µm (0,003").

5. Procédé selon l'une quelconque des revendications précédentes, comprenant en outre l'application d'un revêtement d'aluminium sur au moins une partie de la surface intérieure de la pièce (40) de turbine, sur une épaisseur d'environ 12,7 µm (0,0005") à environ 38,1 µm (0,0015").
